# EUROPEAN PATENT APPLICATION

(11) **EP 4 653 238 A1**
(43) Date of publication of application: **26.11.2025**
(21) Application number: 24177696.2
(22) Date of filing: 23.05.2024
(51) Int. Cl.: B60L 3/12, B60L 53/66

(54) **INDICATING OPERATIONAL STATUS OF A VEHICLE**

(71) Applicant: Volvo Construction Equipment AB, 631 85 Eskilstuna (SE)
(72) Inventor: Örkenrud, Kim, 352 64 Växjö (SE); Ekman, Gordon, 342 63 Moheda (SE); Kvist, Roland, 360 42 Braås (SE)
(74) Representative: Valea AB

(57) **Abstract**

A computer system (600) comprising processing circuitry (602) configured to indicate an operational status of a vehicle (1) comprising one or more indicators (10) attached to the vehicle (1) is provided. The processing circuitry (602) is configured to obtain one or more measurements associated with operational capabilities of a battery (20) of the vehicle (1). The processing circuitry (602) is configured to, based on the one or more measurements, determine an operational status of the vehicle (1). The operational status is indicative of whether or not the vehicle (1) is capable of performing one or more preset operations when powered by the battery (20). The processing circuitry (602) is configured to control the one or more indicators (10) of the vehicle (1) to indicate the determined operational status.

## Description

### TECHNICAL FIELD

The disclosure relates generally to managing vehicle status. In particular aspects, the disclosure relates to indicating operational status of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

An operator of an electric vehicle needs to wait for the vehicle to charge before being able to use the vehicle for its intended purpose. To know when the vehicle is charged, the charger may be associated with a light indicating when the vehicle is fully charged. To know the percentage of the battery charge, the operator may need to turn on the ignition and read the charge from a dash board of the vehicle, or there may be a light indicator on the charger.

Since the operator may want to initiate the operations before reaching a full charge, the operator needs to regularly check the dash board or charger for the charge of the vehicle which takes time and is inefficient.

Some vehicle charging units may further be coupled with a wireless system such that it is possible to read the charge percentage of a mobile phone. However, wireless systems are not suitable in all situations, such as underground or in quarries with limited mobile reception.

Furthermore, besides charge percentage of the battery, there may be other factors to consider whether the vehicle is suitable to perform a certain action such as a battery temperature or an expected charge needed to perform said action. These aspects are difficult for an operator to assess and thereby decision regarding these factors are error prone.

Hence, there is a need to improve efficiency of handling operational status of a vehicle.

### SUMMARY

According to a first aspect of the disclosure, a computer system comprising processing circuitry configured to indicate an operational status of a vehicle comprising one or more indicators attached to the vehicle is provided. The processing circuitry is configured to obtain one or more measurements associated with operational capabilities of a battery of the vehicle. The processing circuitry is configured to, based on the one or more measurements, determine an operational status of the vehicle. The operational status is indicative of whether or not the vehicle is capable of performing one or more preset operations when powered by the battery. The processing circuitry is configured to control the one or more indicators of the vehicle to indicate the determined operational status.

The first aspect of the disclosure may seek to reduce manual inspection of operational status and thereby improve the efficiency of handling operational status of the vehicle. A technical benefit may include that the operator is not required to inspect the dashboard or charger of the vehicle to obtain a current charge of the battery, furthermore the operator does not need to remember the charge percentage needed for the operations to be performed, instead the one or more indicators will indicate the operational status, i.e., whether or not the vehicle is capable of performing the one or more preset operations. Since the one or more indicators are attached to the vehicle, the operator can perform work elsewhere and can be notified of the operational status from a distance. Benefits further relates to that the solution works in areas where wireless communications are limited, e.g., in underground mines, quarries, rural areas or mountainous areas. Optionally, the one or more indicators are attached to the exterior of the vehicle. This may imply that an operator can identify the current status of the one or more indicators at a distance from the vehicle.

Optionally in some examples, including in at least one preferred example, the one or more measurements comprises a temperature of the battery.

A technical benefit may include improved handling of operational status of the vehicle. This is since the temperature of the battery can be taken into account when indicating whether or not the vehicle is capable of performing the one or more preset operations when powered by the battery.

Optionally in some examples, including in at least one preferred example, determining the operational status of the vehicle comprises comparing the temperature of the battery with a predefined temperature interval.

A technical benefit may include improved handling of operational status of the vehicle. This is since the indication may indicate whether or not the battery is within the predefined interval, and thereby whether or not the battery is sufficiently cool or warm to be capable of performing the one or more preset operations. This overcomes problems of operators using vehicles where batteries are too warm or cool, depending on the respective climate, and as a consequence the vehicle will have to stop before completing the one or more preset operations.

Optionally in some examples, including in at least one preferred example, the one or more measurements comprises a State of Charge (SoC) of the battery.

A technical benefit may include improved handling of operational status of the vehicle. This is since the one or more indicators may indicate whether or not the SoC is sufficient to perform the one or more preset operations.

Optionally in some examples, including in at least one preferred example, determining the operational status of the vehicle comprises comparing the SoC with a predefined charging level associated with the battery.

A technical benefit may include improved handling of operational status of the vehicle. This is since the one or more indicators may indicate whether or not the SoC is sufficient with respect to the predefined charging level, which may be set such that it is sufficient for the vehicle to perform the one or more preset operations.

Optionally in some examples, including in at least one preferred example, the predefined charging level is a fraction of a maximum SoC of the battery.

A technical benefit may include improved handling of operational status of the vehicle. This is since the one or more indicators may indicate that the vehicle is capable of performing the one or more preset operations before the battery is fully charged which means that the operator does not need to wait for the battery to be charged to the maximum SoC of the battery and will instead be notified by the one or more indicators when the battery is charged sufficiently such that it is possible to perform the one or more preset operations .

Optionally in some examples, including in at least one preferred example, the one or more preset operations comprises an operation of transporting a set payload along to along a set route.

A technical benefit may include improved handling of operational status of the vehicle. This is since the one or more indicators will not just indicate the charge of the battery, but whether or not the battery will last for transporting the set payload along to along the set route.

Optionally in some examples, including in at least one preferred example, the processing circuitry is further configured to obtain the one or more preset operations as input, preferably as a user input.

A technical benefit may include improved handling of operational status of the vehicle. This is since the one or more preset operations may be set dynamically, and accordingly the one or more indicators will always adapt to indicate the operational status in a dynamic manner.

Optionally in some examples, including in at least one preferred example, the processing circuitry is further configured to, in response to obtaining the one or more preset operations, determine a required SoC, of the battery and/or a required temperature of the battery needed to perform the one or more preset operations, and wherein determining the operational status of the vehicle comprises determining whether or not the current SoC of the battery and/or the current temperature of the battery meets the required SoC and/or the required temperature.

A technical benefit may include improved handling of operational status of the vehicle. This is since the SoC and/or temperature may depend on the one or more preset operations as obtained, for example based on calculations or a predefined model and dynamically obtained one or more preset operations. The operational status may thereby be determined with respect to the required SoC, of the battery and/or a required temperature. In this way, the requirements may be dynamically determined, and the indicated operational status may reflect the dynamically determined requirements.

Optionally in some examples, including in at least one preferred example, the battery is adapted to be charged by being connected to a charging unit separate from the vehicle, and wherein obtaining the one or more measurements is performed while charging the battery.

A technical benefit may include improved handling of operational status of the vehicle. This is since the one or more measurements may directly reflect a current charging of the vehicle as performed by the charging unit.

Optionally in some examples, including in at least one preferred example, determining the operational status comprises, based on the one or more measurements, establishing a value representing the operational status, and wherein indicating the determined operational status comprises controlling the one or more indicators based on the value.

A technical benefit may include improved handling of operational status of the vehicle. This is since the one or more indicators may encode the operational status with respect to the value. For example, different values may indicate using different lights or different light coloring.

Optionally in some examples, including in at least one preferred example, the one or more indicators comprises one or more lights and/or one or more speakers of the vehicle.

A technical benefit may include improved handling of operational status of the vehicle. This is since the combination of lights and/or speakers may provide increased flexibility of encoding the operational status. Furthermore, if the vehicle is not in line of sight, speakers may be preferred, e.g., by issuing a sound when the battery is sufficiently charged and/or sufficiently cool/warm to perform the one or more preset operations.

Optionally in some examples, including in at least one preferred example, the one or more indicators are configured to have a dual purpose such that when the vehicle is configured in a first vehicle mode the one or more indicators are configured to indicate the determined operational status, and when the vehicle is configured in a second vehicle mode, the one or more indicators are configured to be used for a different purpose.

A technical benefit may include improved handling of operational status of the vehicle. This is since the one or more indicators can be flexibly used to have different purposes such as when the vehicle is in a charging mode or operating mode. For example, the one or more indicators may comprise lights used for weighing a payload in the vehicle, e.g., when in a weighing mode or operating mode, and the lights may be used for indicating the operational status when the vehicle is charging the battery.

According to a second aspect of the disclosure a vehicle comprising a battery and one or more indicators attached to the vehicle is provided. The vehicle further comprises and/or is controlled by the computer system according to the first aspect. Benefits and examples of the first aspect correspond to the second aspect and vice versa.

Optionally in some examples, including in at least one preferred example, the one or more indicators comprises one or more lights and/or one or more speakers of the vehicle.

According to a third aspect of the disclosure, a computer-implemented method for indicating an operational status of a vehicle comprising one or more indicators attached to the vehicle is provided.

The method comprises, by a processing circuitry of a computer system, obtaining one or more measurements associated with operational capabilities of a battery of the vehicle.

The method comprises, by the processing circuitry, based on the one or more measurements, determining an operational status of the vehicle, the operational status being indicative of whether or not the vehicle is capable of performing one or more preset operations when powered by the battery.

The method comprises, by the processing circuitry, controlling the one or more indicators of the vehicle to indicate the determined operational status.

Optionally in some examples, including in at least one preferred example, the method comprises, by the processing circuitry, obtaining the one or more preset operations as input, preferably as a user input.

Optionally in some examples, including in at least one preferred example, the method comprises, in response to obtaining the one or more preset operations, determining a required SoC of the battery and/or a required temperature of the battery needed to perform the one or more preset operations, and wherein determining the operational status of the vehicle comprises determining whether or not the current SoC of the battery and/or the current temperature of the battery meets the required SoC and/or the required temperature.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is an exemplary vehicle according to an example.
**FIG. 3** is an exemplary flow chart of a method according to an example.
**FIG. 4** is another view of **FIG. 1****,** according to an example.
**FIG. 5** is a flow chart of an exemplary according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Examples herein may relate to more efficiently and flexibly indicate operational status of a vehicle with respect to its battery, in particular if the vehicle can operate one or more preset operations using the current charge of the battery.

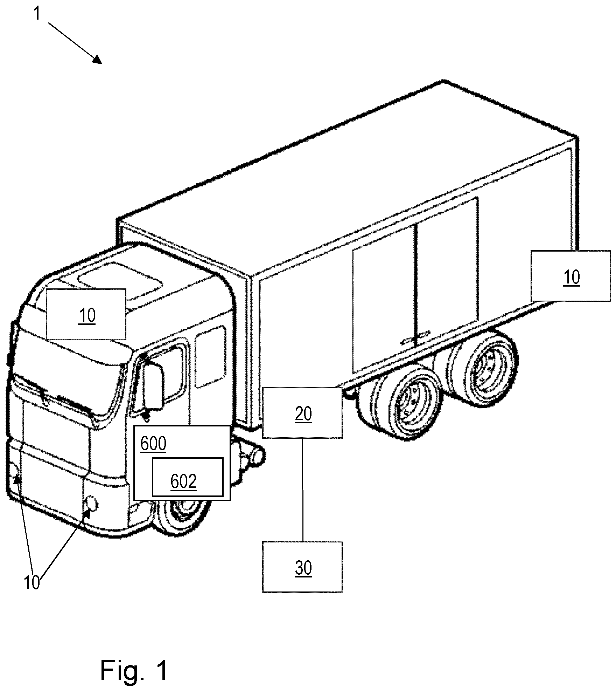

**FIG. 1** illustrates an example vehicle 1. The **vehicle 1** may be any suitable vehicle such as a bus, truck, heavy duty vehicle, or a car. In some preferred examples the vehicle 1 may be a truck such as a dump truck used for loading, hauling, and dumping materials.

The vehicle 1 may be electrically driven or at least partially electrically driven.

The vehicle 1 comprises a **battery 20.** The battery 20 may power the vehicle 1 when the vehicle operates.

In examples herein, the battery 20 may in be adapted to be charged by being connected to a **charging unit 30.** The charging unit 30 may be separate from the vehicle 1.

The vehicle 1 comprises **one or more indicators 10** attached to the vehicle 1. The one or more indicators 10 may be attached to the exterior of the vehicle 1 such as on the roof or part of a chassis, or in any suitable manner such that they may indicate to operators outside of the vehicle 1.

The one or more indicators 10 may be configured to indicate an operational status of the vehicle 1. The operational status is indicative of whether or not the vehicle 1 is capable of performing one or more preset operations when powered by the battery 20.

The one or more indicators 10 may comprise one or more lights and/or one or more speakers of the vehicle 1.

The one or more indicators 10 may comprise any one or more suitable lights of the vehicle for example driving lights, turn signals, beacon, or a specific sign.

The one or more indicators 10 may comprise the signal horn of the vehicle 1.

The one or more indicators 10 may use lights and/or speakers of the vehicle 1 already used for other purposes.

In examples herein, the one or more indicators 10 may be configured to have a dual purpose such that when the vehicle 1 is configured in a first vehicle 1 mode the one or more indicators 10 are configured to indicate the determined operational status, e.g., when the vehicle 1 is in a charging mode. When the vehicle 1 is configured in a second vehicle 1 mode, e.g., an operating mode, the one or more indicators 10 may instead be configured to be used for a different purpose such as indicating a weight of a payload.

The vehicle 1 may be associated with a user interface for receiving input, such as an input of the one or more preset operations.

Examples herein may be performed by a **computer system 600** and/or a **processing circuitry 602** therein.

The computer system 600 and/or the processing circuitry 602 therein may be comprised in the vehicle 1 or may be comprised at a remote location such as part of a server or cloud service.

The computer system 600 and/or the processing circuitry 602 therein may be capable of controlling and/or communicating with any suitable entity of examples herein, e.g., the one or more indicators 10.

The computer system 600 and/or the processing circuitry 602 therein may be an Electronic Control Unit (ECU).

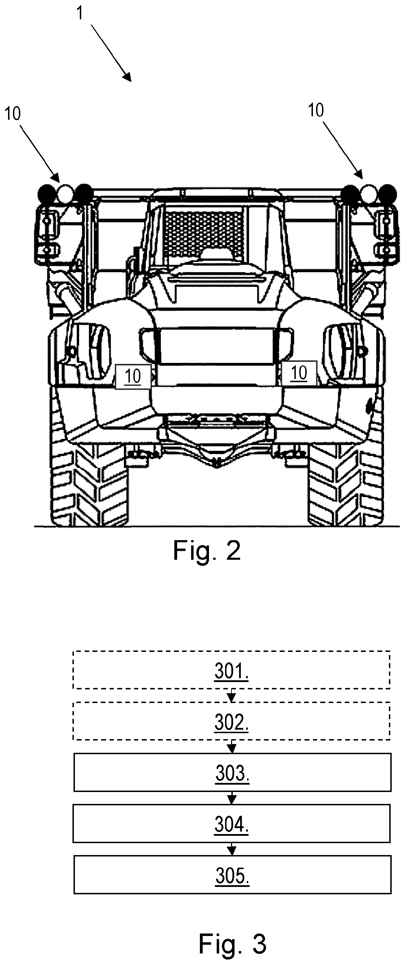

**FIG. 2** illustrates the vehicle 1 according to another example.

In this example, the one or more indicators 10 comprises lights used for indicating a weight of a payload in the vehicle 1. In other words, the one or more indicators may be part of an onboard weighing system. When in a weighing or operating mode, the one or more indicators 10 may be used for indicating the weight of the payload, e.g., if the vehicle 1 overloaded or not. When in a charging mode, i.e., when the battery 20 is charging by the charging unit 30, then the one or more indicators 10 may instead switch mode and only be controlled to indicate the operational status, e.g., whether the vehicle 1 can perform the one or more preset operations when powered by the battery 20. Typically this means that the battery 20 shall be sufficiently charged and/or be within a range of preferred or required battery temperature. Purely by way of example, the one or more indicators may be adapted to emit an overload light signal with a certain color, strength and/or pattern when the vehicle is overloaded and to emit an allowable load light signal with a certain color, strength and/or pattern when the vehicle is not overload. Theres is at least one difference between the overload light signal and the allowable load light signal. When the one or more indicators 10 switch mode, as indicated above, the one or more indicators 10 may be controlled to emit one of the overload light signal and the allowable load light signal, for instance when the battery 20 is sufficiently charged and/or is within a range of preferred or required battery temperature.

**FIG. 3** is an exemplary flow chart of a method for indicating an operational status of the vehicle 1 according to an example. The vehicle 1 comprises the one or more indicators 10 attached to the vehicle 1. In actions below, the battery 20 may typically be adapted to be charged by being connected to the charging unit 30 where the charging unit is separate from the vehicle 1. In actions below, the one or more indicators 10 may comprise one or more lights and/or one or more speakers of the vehicle 1.

The method may be performed by the computer system 600 and/or the processing circuitry 602 therein. The following actions may form part of the method and may be taken in any suitable order. Optional actions may be indicated by dashed boxes in **FIG. 3****.**

### Action 301

In some examples, the method may comprise obtaining one or more preset operations as input, preferably as a user input, e.g., by input into a dashboard of the vehicle 1 or by use of any other suitable input such as by using a wireless device to input the one or more preset operations.

The one or more preset operation may comprise operations to be performed by the vehicle 1, when powered by the battery 20.

The one or more preset operations may comprise an operation of transporting a set payload along to along a set route.

In actions below, if not obtained as an input, the one or more preset operations may instead be predefined in any suitable manner.

### Action 302

In some examples, the method may comprise, determining a required SoC of the battery 20 and/or a required temperature of the battery 20 needed to perform the one or more preset operations. The action may be performed in response to obtaining the one or more preset operations, e.g., as in action 301. Determining the operational status of the vehicle 1 may comprise determining whether or not the current SoC of the battery 20 and/or the current temperature of the battery 20 meets the required SoC and/or the required temperature.

In other words, the one or more preset operations may be dynamically entered as input, and the required SoC and/or temperature may be determined.

### Action 303

The method comprises obtaining one or more measurements associated with operational capabilities of a battery 20 of the vehicle 1.

The one or more measurements may comprise any suitable measurements related to the battery 20 or charging thereof.

For example, the one or more measurements may comprises a temperature of the battery 20.

As another example, the one or more measurements may comprise SoC of the battery 20.

Obtaining the one or more measurements may preferably be performed while charging the battery 20.

### Action 304

The method comprises, determining, based on the one or more measurements, an operational status of the vehicle 1. The operational status is indicative of whether or not the vehicle 1 is capable of performing one or more preset operations when powered by the battery 20.

Determining the operational status of the vehicle 1 may comprise comparing the temperature of the battery 20 with a predefined temperature interval, e.g., as predefined statically or as predefined by the required temperature of action 302.

Determining the operational status of the vehicle 1 may comprise comparing the SoC with a predefined charging level associated with the battery 20, e.g., as predefined statically or as predefined by the required temperature of action 302.

The predefined charging level may typically be a fraction of a maximum SoC of the battery 20. For example, the predefined charging level may be 50% of the maximum SoC for the one or more preset operations.

In some examples, determining the operational status comprises, based on the one or more measurements, establishing a value representing the operational status.

### Action 305

The method comprises, controlling the one or more indicators 10 of the vehicle 1 to indicate the determined operational status.

In other words, based on SoC and/or temperature, the one or more indicators 10 are controlled to indicate whether or not the vehicle 1 is capable of performing the one or more preset operations, when powered by the battery 20. Typically this may relate to that the SoC of the battery 20 is sufficiently charged such that the SoC will last for performing the one or more preset operations and/or that the temperature of the battery 20 is within a safe or optimal interval such that the one or more preset operations can be performed.

In some examples, controlling the one or more indicators 10 of the vehicle 1 to indicate the determined operational status may further comprise controlling the one or more indicators 10 based on the value. In other words, the one or more indicators 10 may indicate the operational status based on the value. This allows for an encoding to show the current status. For example, different lights or colorings of certain lights may light up or not depending on which of the one or more preset operations are ready, and/or the lights may light up depending on a time until the vehicle 1 is ready to perform the one or more preset operations.

Controlling the one or more indicators 10 of the vehicle 1 to indicate the determined operational status may comprise the one or more indicators 10 indicating an external signal. The external signal may be any one or more lights of the vehicle 1 for example driving lights, turn signals, beacon, or a specific sign. Additionally or alternatively, the external signal may comprise the signal horn of the vehicle 1.

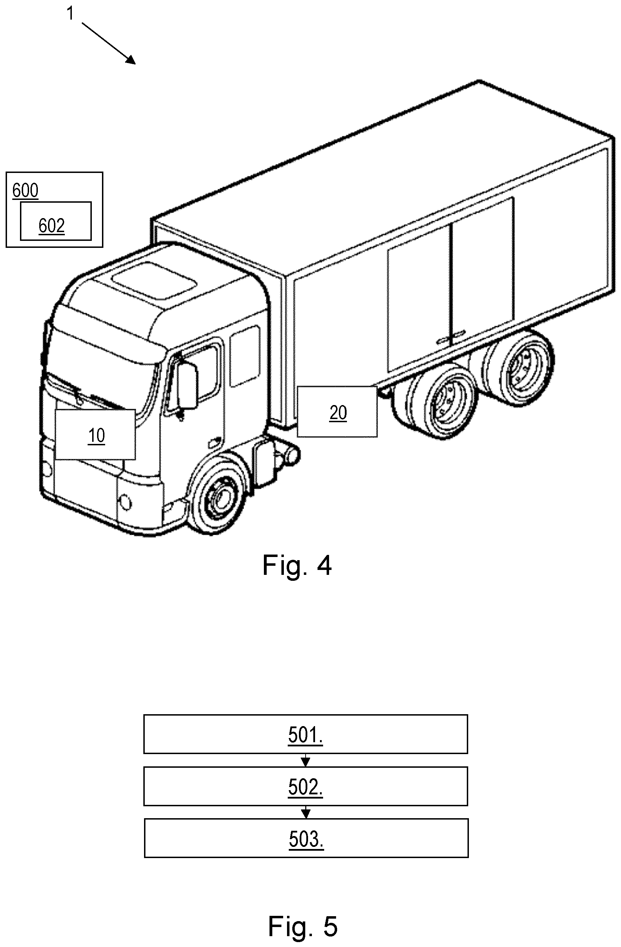

**FIG. 4** is another view of **FIG. 1****,** according to an example.

The computer system 600 comprising the processing circuitry 602 configured to indicate an operational status of the vehicle 1 comprising the one or more indicators 10 attached to the vehicle 1 The processing circuitry 602 is configured to obtain one or more measurements associated with operational capabilities of the battery 20 of the vehicle 1.

The processing circuitry 602 is configured to, based on the one or more measurements, determine an operational status of the vehicle 1. The operational status is indicative of whether or not the vehicle 1 is capable of performing one or more preset operations when powered by the battery 20.

The processing circuitry 602 is configured to control the one or more indicators 10 of the vehicle 1 to indicate the determined operational status.

**FIG. 5** is a flow chart of an exemplary computer-implemented method for indicating an operational status of the vehicle 1 comprising the one or more indicators 10 attached to the vehicle is provided. The method comprises the following actions which may be combined with any one or more out of the examples above, in particular actions 301-305, in any suitable manner.

### Action 501

The method comprises: by the processing circuitry 602 of the computer system 600, obtaining one or more measurements associated with operational capabilities of the battery 20 of the vehicle 1.

### Action 502

The method comprises: by the processing circuitry 602, based on the one or more measurements, determining an operational status of the vehicle 1. The operational status is indicative of whether or not the vehicle 1 is capable of performing one or more preset operations when powered by the battery 20.

### Action 503

The method comprises: by the processing circuitry 602, controlling the one or more indicators 10 of the vehicle 1 to indicate the determined operational status.

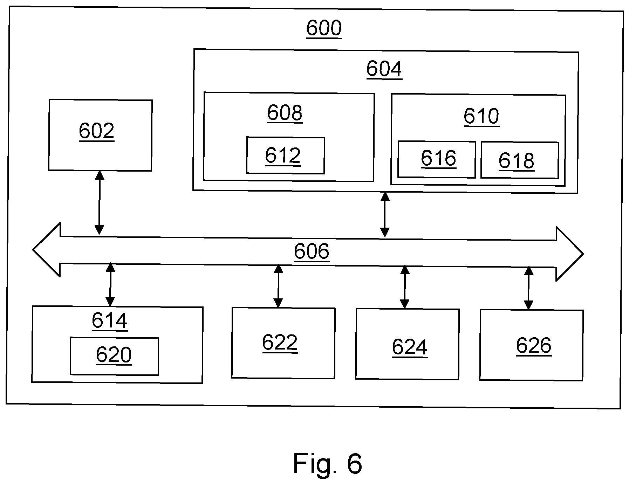

**FIG.** 6 is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., randomaccess memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a number of Examples 1-20 which Examples may be combined with any other examples herein in any suitable manner.
Example 1. A computer system 600 comprising processing circuitry 602 configured to indicate an operational status of a vehicle 1 comprising one or more indicators 10 attached to the vehicle 1, the processing circuitry 602 is configured to:
   - obtain one or more measurements associated with operational capabilities of a battery 20 of the vehicle 1,
   - based on the one or more measurements, determine an operational status of the vehicle 1, the operational status being indicative of whether or not the vehicle 1 is capable of performing one or more preset operations when powered by the battery 20,
   - control the one or more indicators 10 of the vehicle 1 to indicate the determined operational status.
Example 2. The computer system 600 of Example 1, wherein the one or more measurements comprising a temperature of the battery 20.
Example 3. The computer system 600 of Example 2, wherein determining the operational status of the vehicle 1 comprises comparing the temperature of the battery 20 with a predefined temperature interval.
Example 4. The computer system 600 of any of Examples 1-3, wherein the one or more measurements comprises a State of Charge, SoC, of the battery 20.
Example 5. The computer system 600 of Example 4, wherein determining the operational status of the vehicle 1 comprises comparing the SoC with a predefined charging level associated with the battery 20.
Example 6. The computer system 600 of Example 5, wherein the predefined charging level is a fraction of a maximum SoC of the battery 20.
Example 7. The computer system 600 of any of Examples 1-6, wherein the one or more preset operations comprises an operation of transporting a set payload along to along a set route.
Example 8. The computer system 600 of any of Examples 1-7, wherein the processing circuitry 602 is further configured to obtain the one or more preset operations as input, preferably as a user input.
Example 9. The computer system 600 of Example 8, wherein the processing circuitry 602 is further configured to, in response to obtaining the one or more preset operations, determine a required State of Charge, SoC, of the battery 20 and/or a required temperature of the battery 20 needed to perform the one or more preset operations, and wherein determining the operational status of the vehicle 1 comprises determining whether or not the current SoC of the battery 20 and/or the current temperature of the battery 20 meets the required SoC and/or the required temperature.
Example 10. The computer system 600 of any of Examples 1-9, wherein the battery 20 is adapted to be charged by being connected to a charging unit 30 separate from the vehicle 1, and wherein obtaining the one or more measurements is performed while charging the battery 20.
Example 11. The computer system 600 of any of Examples 1-10, wherein determining the operational status comprises, based on the one or more measurements, establishing a value representing the operational status, and wherein indicating the determined operational status comprises controlling the one or more indicators 10 based on the value.
Example 12. The computer system 600 of any of Examples 1-11, wherein the one or more indicators 10 comprises one or more lights and/or one or more speakers of the vehicle 1.
Example 13. The computer system 600 of Example 12, wherein the one or more indicators 10 are configured to have a dual purpose such that when the vehicle 1 is configured in a first vehicle 1 mode the one or more indicators 10 are configured to indicate the determined operational status, and when the vehicle 1 is configured in a second vehicle 1 mode, the one or more indicators 10 are configured to be used for a different purpose.
Example 14. A vehicle 1 comprising a battery 20 and one or more indicators 10 attached to the vehicle 1, and further comprising and/or being controlled by the computer system 600 of any of Examples 1-13.
Example 15. The vehicle 1 of Example 14 wherein the one or more indicators 10 comprises one or more lights and/or one or more speakers of the vehicle 1.
Example 16. A computer-implemented method for indicating an operational status of a vehicle 1 comprising one or more indicators 10 attached to the vehicle 1, the method comprising:
   - by a processing circuitry 602 of a computer system 600, obtaining 303, 501 one or more measurements associated with operational capabilities of a battery 20 of the vehicle 1,
   - by the processing circuitry 602, based on the one or more measurements, determining 304, 502 an operational status of the vehicle 1, the operational status being indicative of whether or not the vehicle 1 is capable of performing one or more preset operations when powered by the battery 20,
   - by the processing circuitry 602, controlling 305, 503 the one or more indicators 10 of the vehicle 1 to indicate the determined operational status.
Example 17. The method of Example 16, further comprising:
   - by the processing circuitry 602, obtaining 301 the one or more preset operations as input, preferably as a user input.
Example 18. The method of Example 17, further comprising:
   - in response to obtaining the one or more preset operations, determining 302 a required State of Charge, SoC, of the battery 20 and/or a required temperature of the battery 20 needed to perform the one or more preset operations, and wherein determining the operational status of the vehicle 1 comprises determining whether or not the current SoC of the battery 20 and/or the current temperature of the battery 20 meets the required SoC and/or the required temperature.
Example 19. A computer program product comprising program code for performing, when executed by the processing circuitry 602, the method of any of Examples 16-18.
Example 20. A non-transitory computer-readable storage medium comprising instructions, which when executed by the processing circuitry 602, cause the processing circuitry 602 to perform the method of any of Examples 16-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to indicate an operational status of a vehicle (1) comprising one or more indicators (10) attached to the vehicle (1), the processing circuitry (602) is configured to:
- obtain one or more measurements associated with operational capabilities of a battery (20) of the vehicle (1),
- based on the one or more measurements, determine an operational status of the vehicle (1), the operational status being indicative of whether or not the vehicle (1) is capable of performing one or more preset operations when powered by the battery (20),
- control the one or more indicators (10) of the vehicle (1) to indicate the determined operational status.

2. The computer system (600) of claim 1, wherein the one or more measurements comprising a temperature of the battery (20).

3. The computer system (600) of claim 2, wherein determining the operational status of the vehicle (1) comprises comparing the temperature of the battery (20) with a predefined temperature interval.

4. The computer system (600) of any of claims 1-3, wherein the one or more measurements comprises a State of Charge, SoC, of the battery (20).

5. The computer system (600) of claim 4, wherein determining the operational status of the vehicle (1) comprises comparing the SoC with a predefined charging level associated with the battery (20), and optionally, wherein the predefined charging level is a fraction of a maximum SoC of the battery (20).

6. The computer system (600) of any of claims 1-5, wherein the one or more preset operations comprises an operation of transporting a set payload along to along a set route.

7. The computer system (600) of any of claims 1-6, wherein the processing circuitry (602) is further configured to obtain the one or more preset operations as input, preferably as a user input.

8. The computer system (600) of claim 7, wherein the processing circuitry (602) is further configured to, in response to obtaining the one or more preset operations, determine a required State of Charge, SoC, of the battery (20) and/or a required temperature of the battery (20) needed to perform the one or more preset operations, and wherein determining the operational status of the vehicle (1) comprises determining whether or not the current SoC of the battery (20) and/or the current temperature of the battery (20) meets the required SoC and/or the required temperature.

9. The computer system (600) of any of claims 1-8, wherein the battery (20) is adapted to be charged by being connected to a charging unit (30) separate from the vehicle (1), and wherein obtaining the one or more measurements is performed while charging the battery (20).

10. The computer system (600) of any of claims 1-9, wherein determining the operational status comprises, based on the one or more measurements, establishing a value representing the operational status, and wherein indicating the determined operational status comprises controlling the one or more indicators (10) based on the value.

11. The computer system (600) of any of claims 1-10, wherein the one or more indicators (10) comprises one or more lights and/or one or more speakers of the vehicle (1), and optionally wherein the one or more indicators (10) are configured to have a dual purpose such that when the vehicle (1) is configured in a first vehicle (1) mode the one or more indicators (10) are configured to indicate the determined operational status, and when the vehicle (1) is configured in a second vehicle (1) mode, the one or more indicators (10) are configured to be used for a different purpose.

12. A vehicle (1) comprising a battery (20) and one or more indicators (10) attached to the vehicle (1), and further comprising and/or being controlled by the computer system (600) of any of claims 1-11, and optionally wherein the one or more indicators (10) comprises one or more lights and/or one or more speakers of the vehicle (1).

13. A computer-implemented method for indicating an operational status of a vehicle (1) comprising one or more indicators (10) attached to the vehicle (1), the method comprising:
- by a processing circuitry (602) of a computer system (600), obtaining (303, 501) one or more measurements associated with operational capabilities of a battery (20) of the vehicle (1),
- by the processing circuitry (602), based on the one or more measurements, determining (304, 502) an operational status of the vehicle (1), the operational status being indicative of whether or not the vehicle (1) is capable of performing one or more preset operations when powered by the battery (20),
- by the processing circuitry (602), controlling (305, 503) the one or more indicators (10) of the vehicle (1) to indicate the determined operational status.

14. A computer program product comprising program code for performing, when executed by the processing circuitry (602), the method of claim 13.

15. A non-transitory computer-readable storage medium comprising instructions, which when executed by the processing circuitry (602), cause the processing circuitry (602) to perform the method of claim 13.
